(19) Europäisches Patentamt
European Patent Office
Office européen des brevets

(11) EP 4 640 306 A1

(12) **EUROPEAN PATENT APPLICATION**
published in accordance with Art. 153(4) EPC

(43) Date of publication:
**29.10.2025 Bulletin 2025/44**

(21) Application number: **23907076.6**

(22) Date of filing: **20.12.2023**

(51) International Patent Classification (IPC):
***B01D 71/56*** *(2006.01)* ***B01D 65/00*** *(2006.01)*

(52) Cooperative Patent Classification (CPC):
**B01D 65/00; B01D 71/56**

(86) International application number:
**PCT/JP2023/045637**

(87) International publication number:
**WO 2024/135716 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.12.2022 JP 2022204061**

(71) Applicant: **Toray Industries, Inc.**
**Tokyo 103-8666 (JP)**

(72) Inventors:
- **OKAMOTO, Yoshiki**
  **Otsu-shi, Shiga 520-8558 (JP)**
- **OGAWA, Takafumi**
  **Otsu-shi, Shiga 520-8558 (JP)**
- **HANADA, Shigehisa**
  **Otsu-shi, Shiga 520-8558 (JP)**
- **KONDA, Takeshi**
  **Otsu-shi, Shiga 520-8558 (JP)**
- **YOSHIMATSU, Tomoki**
  **Otsu-shi, Shiga 520-8558 (JP)**

(74) Representative: **Kador & Partner Part mbB**
**Corneliusstraße 15**
**80469 München (DE)**

# (54) PROCESSING METHOD FOR POLYAMIDE-BASED SEMIPERMEABLE MEMBRANE, PRODUCTION METHOD AND PROCESSING APPARATUS FOR SEMIPERMEABLE MEMBRANE ELEMENT, AND FLUID PROCESSING METHOD AND FLUID PROCESSING APPARATUS EACH USING SEMIPERMEABLE MEMBRANE ELEMENT

(57) The present invention improves the removal performance of a semipermeable membrane if the removal performance is lower than the desired level or has been deteriorated. A processing method for a semipermeable membrane, which is provided with a separation function layer that contains a polyamide, according to the present invention comprises: (a) a step in which a multifunctional amine is bonded to the polyamide; and (b) a step in which at least one of a multifunctional carboxylic acid and a multifunctional acid halide is bonded to the polyamide.

EP 4 640 306 A1

## Description

### TECHNICAL FIELD

The present invention relates to a method for treating a semipermeable membrane useful for selective separation of a liquid mixture, and more particularly to a method for treating a semipermeable membrane including a separation functional layer containing a polyamide.

### BACKGROUND ART

Semipermeable membranes for use in separation of a liquid mixture include a microfiltration membrane, an ultrafiltration membrane, a nanofiltration membrane, a reverse osmosis membrane, and the like, and these membranes are used, for example, to produce drinking water from water containing salt or a harmful substance, to produce ultrapure water for industrial use, to treat wastewater, or to collect a valuable material.

Most of currently commercially available reverse osmosis membranes and nanofiltration membranes are composite semipermeable membranes. A typical composite semipermeable membrane includes a microporous support membrane and a separation functional layer that is made of a crosslinked aromatic polyamide, obtained by a polycondensation reaction of a polyfunctional amine and a polyfunctional acid halide, and that coats the microporous support membrane, and has high permeability and selective separability.

However, water permeation performance of the semipermeable membrane decreases due to organic fouling, inorganic fouling (scale), bio-fouling caused by organic substances, inorganic substances, microorganisms, and the like present in the liquid mixture during use of the semipermeable membrane. In order to recover the water permeation performance decreased by fouling, the membrane is washed with a chemical solution containing an acid or an alkali. In addition, an oxidizing agent such as chlorine may be supplied for cleaning a pipe or the like, and the oxidizing agent may be mixed into a liquid to be supplied to the semipermeable membrane, so that the semipermeable membrane and the oxidizing agent may come into contact with each other. Therefore, even when the fouling cause substance is removed by washing with an acid or an alkali and the water permeation performance is recovered, the removal performance of the semipermeable membrane may decrease as a result of contact between the semipermeable membrane and a chemical solution such as an oxidizing agent.

Patent Literature 1 discloses that examples of a cause for deterioration of a polyamide film by an oxidizing agent include collapse of a sieve structure due to the cleavage of a C-N bond (amide bond). In addition, Patent Literature 1 discloses, as a method of increasing a rejection rate of such a deteriorated film, bonding an amino compound to a carboxy group generated in a cleaved part of the amide bond. The method of increasing a rejection rate described in Patent Literature 1 includes a step of passing a first organic compound having a molecular weight of less than 200, a second organic compound having a molecular weight of 200 or more and less than 500, and a third organic compound having a molecular weight of 500 or more through a polyamide membrane.

Examples of the first and second organic compounds include aromatic amino compounds such as aniline and diaminobenzene, and aliphatic amino compounds such as methylamine and 1,9-diaminonane. The third organic compound includes those having a carboxy group, an amino group, a hydroxy group, or a cyclic structure, such as tannic acid and peptides.

According to Patent Literature 1, the first and second organic compounds having a low molecular weight have high solubility in water, react with the carboxy group in the membrane to be bonded to a reverse osmosis membrane, and form an insoluble salt to block holes generated due to the deterioration of the membrane, and the third organic compound blocks a large deteriorated portion of the membrane, thereby increasing the rejection rate of the membrane.

### CITATION LIST

### PATENT LITERATURE

Patent Literature 1: JP2012-187469A

### SUMMARY OF INVENTION

### TECHNICAL PROBLEM

An object of the present invention is to provide a treatment method capable of improving removal performance of a semipermeable membrane whose removal performance does not reach a desired level or whose removal performance has decreased.

SOLUTION TO PROBLEM

In order to solve the above problems, a method for treating a semipermeable membrane, a method for producing a semipermeable membrane element, an apparatus for treating a semipermeable membrane element, and a fluid treatment method and a fluid treatment apparatus using a semipermeable membrane element according to the present invention have any of the following configurations.

[1] A method for treating a semipermeable membrane including a separation functional layer containing a polyamide, the treatment method including:

(a) a step of bonding a polyfunctional amine to the polyamide; and
(b) a step of bonding at least one of a polyfunctional carboxylic acid and a polyfunctional acid halide to the polyamide.

[2] The treatment method according to the above [1], in which the step (b) is performed after the step (a).
[3] The treatment method according to the above [1] or [2], in which both of the bonding in the step (a) and the bonding in the step (b) are covalent bonding.
[4] The treatment method according to any one of the above [1] to [3], in which the step (a) includes covalently bonding the polyfunctional amine to the polyamide using a condensing agent.
[5] The treatment method according to any one of the above [1] to [4], in which the step (b) includes covalently bonding the polyfunctional carboxylic acid to the polyamide using a condensing agent.
[6] The treatment method according to any one of the above [1] to [5], in which the step (a) and the step (b) are alternately repeated twice or more.
[7] The treatment method according to the above [6], in which the repetition of the step (a) and the step (b) is ended at the step (b).
[8] The treatment method according to any one of the above [1] to [7], in which

the semipermeable membrane is incorporated into a semipermeable membrane element, and
the step (a) and the step (b) are performed on the semipermeable membrane element showing at least one of a salt permeability higher than an initial value by 10% or more and a neutral molecule permeability higher than an initial value by 10% or more.

[9] The treatment method according to any one of the above [1] to [8], in which the step (a) and the step (b) are performed on a semipermeable membrane contacted with at least one kind of chemical agent selected from the group consisting of an acid having a pH of 4 or less, an alkali having a pH of 10 or more, and an oxidizing agent.
[10] A method for treating a semipermeable membrane including a separation functional layer containing a polyamide, the treatment method including:

(A) a step of bringing an aqueous solution containing a polyfunctional amine and a condensing agent into contact with the separation functional layer; and
(B) a step of bringing at least one of an aqueous solution containing a polyfunctional carboxylic acid and an organic solvent solution containing a polyfunctional acid halide into contact with the separation functional layer.

[11] The treatment method according to the above [10], in which the step (B) is performed after the step (A).
[12] The treatment method according to the above [4], [5], [10], or [11], in which the condensing agent is a carbodiimide-based condensing agent or a triazine-based condensing agent.
[13] A method for producing a semipermeable membrane element incorporating a semipermeable membrane including a separation functional layer containing a polyamide, the method including:
a step of treating the semipermeable membrane by using the treatment method according to any one of the above [1] to [12].
[14] An apparatus for treating a semipermeable membrane element using the treatment method according to any one of the above [1] to [12], the apparatus including:

a first tank configured to store an aqueous solution containing a polyfunctional amine;
a second tank configured to store at least one of an aqueous solution containing a polyfunctional carboxylic acid and an organic solvent solution containing a polyfunctional acid halide;
an element mounting unit configured to mount at least one semipermeable membrane element into which a semipermeable membrane including a separation functional layer containing a polyamide is incorporated;

a pipe connecting the first tank and the element mounting unit;
a pipe connecting the second tank and the element mounting unit;
a first pump between the first tank and the element mounting unit; and
a second pump between the second tank and the element mounting unit.

[15] A fluid treatment apparatus for treating a fluid using a semipermeable membrane element obtained by the method for producing a semipermeable membrane element according to the above [13].
[16] A fluid treatment method for treating a fluid using a semipermeable membrane element obtained by the method for producing a semipermeable membrane element according to the above [13].

ADVANTAGEOUS EFFECTS OF INVENTION

According to the present invention, it is possible to improve the removal performance of the semipermeable membrane whose removal performance does not reach a desired level or whose removal performance has decreased.

DESCRIPTION OF EMBODIMENTS

Hereinafter, the present invention is described in more detail.
Note that, in the present description, "mass" is synonymous with "weight".

<Treatment Method>

(1) Outline

Hereinafter, a method for treating a semipermeable membrane including a separation functional layer containing a polyamide (polyamide-based semipermeable membrane) is described. The treatment method includes:

(a) a step of bonding a polyfunctional amine to the polyamide; and
(b) a step of bonding at least one of a polyfunctional carboxylic acid and a polyfunctional acid halide to the polyamide.

With this treatment method, it is possible to improve performance of the semipermeable membrane that does not satisfy desired performance or does not satisfy the desired performance due to contact with a chemical solution.
The polyamide contained in the separation functional layer included in the semipermeable membrane according to the present embodiment can be hydrolyzed by contact with an oxidizing agent mixed in raw water supplied to the semipermeable membrane. The hydrolyzed portion forms coarse pores, through which a substance to be removed permeates. In the coarse pores, carboxy groups are exposed by hydrolysis of the polyamide.
The coarse pores can be reduced in size by bonding the polyfunctional amine to a functional group such as a carboxy group in the polyamide separation functional layer. Here, the "bonding" means any bonding of ionic bonding, covalent bonding, and intermolecular force (Van Der Waals force or hydrogen bonding).
In addition, the coarse pores can be reduced in size also by bonding at least one of the polyfunctional carboxylic acid and the polyfunctional acid halide to a functional group such as an amino group in the polyamide separation functional layer.
In the method for treating a semipermeable membrane according to the present embodiment, by bonding the polyfunctional amine and at least one of the polyfunctional carboxylic acid and the polyfunctional acid halide to the polyamide, the coarse pores can be reduced in size, and the performance of the semipermeable membrane can be improved.
More specifically, an amide bond can be formed between the polyfunctional amine and a terminal carboxy group in the polyamide separation functional layer, and the polyfunctional carboxylic acid and the polyfunctional acid halide can generate an amide bond with the terminal amino group in the polyamide separation functional layer.
Further, the coarse pores can be further reduced in size by repeating the step of bonding the polyfunctional amine and the step of bonding at least one of the polyfunctional carboxylic acid and the polyfunctional acid halide.

(2) (a) Step of Bonding Polyfunctional Amine

Examples of the polyfunctional amine include a polyfunctional aromatic amine and a polyfunctional aliphatic amine.
The polyfunctional aromatic amine is an aromatic amine having two or more amino groups of at least one of a primary amino group and a secondary amino group in one molecule, and at least one of the amino groups is a primary

amino group. Examples of the polyfunctional aromatic amine include compounds in which two amino groups are bonded to an aromatic ring at any of an ortho position, a meta position, and a para position, such as o-phenylenediamine, m-phenylenediamine, p-phenylenediamine, o-xylylenediamine, m-xylylenediamine, p-xylylenediamine, o-diaminopyridine, m-diaminopyridine, and p-diaminopyridine, 1,3,5-triaminobenzene, 1,2,4-triaminobenzene, 3,5-diaminobenzoic acid, 3-aminobenzylamine, and 4-aminobenzylamine. In particular, m-phenylenediamine, p-phenylenediamine, or 1,3,5-triaminobenzene is suitably used from the viewpoint of obtaining a semipermeable membrane having excellent selective separability, permeability and heat resistance.

The polyfunctional aliphatic amine is an aliphatic amine having two or more amino groups in one molecule. Examples of the polyfunctional aliphatic amine include a piperazine and a derivative thereof, and ethylenediamine

The piperazine and the derivative thereof are specifically represented by the following general formula (I).

[Chem. 1]

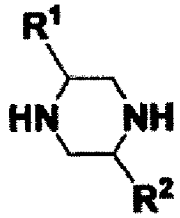

(I)

($R^1$ and $R^2$ are each -H or $-(CH_2)_n-CH_3$, and n is an integer of 0 to 3.)

Examples of the piperazine and the derivative thereof include piperazine, 2,5-dimethylpiperazine, 2-methylpiperazine, 2,6-dimethylpiperazine, 2,3,5-trimethylpiperazine, 2,5-diethylpiperazine, 2,3,5-triethylpiperazine, 2-n-propylpiperazine, and 2,5-di-n-butylpiperazine. In particular, piperazine or dimethylpiperazine is preferably used.

In this step, at least one kind of polyfunctional amine may be used, and two or more kinds of compounds may be selected from the polyfunctional aromatic amine and the polyfunctional aliphatic amine.

The step (a) may include covalently bonding the polyfunctional amine to the polyamide using a condensing agent. Specifically, this step can be performed as a step (A) of bringing an aqueous solution containing a polyfunctional amine and a condensing agent into contact with the separation functional layer. The contact with the separation functional layer is performed by bringing the aqueous solution into contact with a surface of the separation functional layer.

A contact time of the polyfunctional amine aqueous solution with the surface of the separation functional layer is preferably 1 minute or longer and 72 hours or shorter, more preferably 30 minutes or longer and 48 hours or shorter, and still more preferably 1 hour or longer and 24 hours or shorter per treatment.

A concentration of the polyfunctional amine in the polyfunctional amine aqueous solution is preferably 0.005 mass% or more and 0.5 mass% or less, and more preferably 0.01 mass% or more and 0.3 mass% or less.

A concentration of the condensing agent in the polyfunctional amine aqueous solution is preferably 0.001 mass% or more and 1.0 mass% or less, and more preferably 0.005 mass% or more and 0.3 mass% or less. When the concentration of the condensing agent is 0.001 mass% or more, the bonding between the terminal carboxy group present in the polyamide separation functional layer and the polyfunctional amine can be sufficiently generated.

The kind of the condensing agent is to be described later.

A supply temperature of the polyfunctional amine aqueous solution is preferably 10°C or higher and 50°C or lower, and more preferably 20°C or higher and 45°C or lower since the bonding between the carboxy group and the polyfunctional amine is likely to be promoted when the temperature is high, but when the temperature is too high, the semipermeable membrane is influenced by heat.

In order to promote the bonding between the carboxy group and the polyfunctional amine, the pH of the polyfunctional amine aqueous solution may be 10 or more and 13 or less.

(3) (b) Step of Bonding Polyfunctional Carboxylic Acid or Polyfunctional Acid Halide

The polyfunctional carboxylic acid is a carboxylic acid having two or more carboxy groups in one molecule. Examples of the polyfunctional carboxylic acid include oxalic acid, malonic acid, maleic acid, fumaric acid, glutaric acid, 1,3,5-cyclohexanetricarboxylic acid, 1,3-cyclohexanedicarboxylic acid, 1,4-cyclohexanedicarboxylic acid, 1,3,5-benzenetricarboxylic acid (hereinafter, "trimesic acid"), 1,2,4-benzenetricarboxylic acid, 1,3-benzenedicarboxylic acid, and 1,4-benzenedicarboxylic acid. Among the polyfunctional carboxylic acids, 1,3,5-benzenetricarboxylic acid is preferred. As the

polyfunctional carboxylic acid, only one kind of compound may be used, or two or more kinds of compounds may be used in combination.

The polyfunctional acid halide is an acid halide having two or more halogenated carbonyl groups in one molecule. The polyfunctional acid halide can form an amide bond by a reaction with a terminal amino group.

As the polyfunctional acid halide, for example, halides such as oxalic acid, malonic acid, maleic acid, fumaric acid, glutaric acid, 1,3,5-cyclohexanetricarboxylic acid, 1,3-cyclohexanedicarboxylic acid, 1,4-cyclohexanedicarboxylic acid, trimesic acid, 1,2,4-benzenetricarboxylic acid, 1,3-benzenedicarboxylic acid, and 1,4-benzenedicarboxylic acid can be used. Among the acid halides, an acid chloride is preferred.

The polyfunctional acid halide is preferably a polyfunctional aromatic acid halide. The polyfunctional aromatic acid halide specifically refers to an aromatic acid halide having at least 2, preferably 2 to 4, carbonyl chloride groups in one molecule (that is, a polyfunctional aromatic acid chloride). Examples of a trifunctional acid halide include trimesoyl chloride, and examples of a bifunctional acid halide include biphenyl dicarboxylic acid dichloride, azo benzene dicarboxylic acid dichloride, terephthalic acid chloride, isophthalic acid chloride, and naphthalene dicarboxylic acid chloride. As the polyfunctional aromatic acid halide, only one kind of compound may be used, or two or more kinds of compounds may be used in combination.

In the step (b), the polyfunctional carboxylic acid is used as an aqueous solution, and the polyfunctional acid halide is used as an organic solvent solution. That is, this step can be performed as a step (B) of bringing at least one of an aqueous solution containing a polyfunctional carboxylic acid and an organic solvent solution containing a polyfunctional acid halide into contact with the separation functional layer. The contact with the separation functional layer is performed by bringing the aqueous solution or the organic solvent solution into contact with the surface of the separation functional layer as in the step (A).

A contact time of the polyfunctional carboxylic acid aqueous solution or the organic solvent solution containing the polyfunctional acid halide (hereinafter, also referred to as a polyfunctional acid halide solution) with the membrane surface is preferably 1 minute or longer and 6 hours or shorter, and more preferably 10 minutes or longer and 3 hours or shorter per treatment.

A concentration of the polyfunctional carboxylic acid in the polyfunctional carboxylic acid aqueous solution is preferably 0.005 mass% or more and 0.5 mass% or less, and more preferably 0.01 mass% or more and 0.3 mass% or less.

The step (b) may include covalently bonding the polyfunctional carboxylic acid to the polyamide using a condensing agent. A concentration of the condensing agent in the polyfunctional carboxylic acid aqueous solution is preferably 0.001 mass% or more and 1.0 mass% or less, and more preferably 0.005 mass% or more and 0.3 mass% or less. When the concentration of the condensing agent is 0.001 mass% or more, the bonding between the terminal amino group present in the polyamide separation functional layer and the polyfunctional carboxylic acid can be sufficiently generated.

A temperature of the polyfunctional carboxylic acid aqueous solution is preferably 10°C or higher and 50°C or lower, and more preferably 20°C or higher and 45°C or lower in order to promote the bonding between the amino group and the polyfunctional carboxylic acid and to prevent the influence of heat on the semipermeable membrane.

In addition, in order to promote the bonding between the amino group and the polyfunctional carboxylic acid, the pH of the polyfunctional carboxylic acid aqueous solution may be 10 or more and 13 or less.

As an organic solvent for dissolving the polyfunctional acid halide, an organic solvent immiscible with water and having a solubility parameter (SP value) of 15.2 $(MPa)^{1/2}$ or more, and an octanol-water partition coefficient (logP) of 3.2 or more is used. In addition, the organic solvent preferably does not break a support, particularly a porous support layer. As a representative example of the organic solvent satisfying the above, octane, nonane, decane, undecane, dodecane, isododecane, tridecane, tetradecane, heptadecane, hexadecane, isodecane, cyclooctane, isooctane, ethylcyclohexane, 1-octene, and 1-decene alone, or a mixture thereof is preferably used.

A concentration of the polyfunctional acid halide in the organic solvent solution containing the polyfunctional acid halide is preferably 0.005 mass% or more and 0.5 mass% or less, and more preferably 0.01 mass% or more and 0.3 mass% or less.

A temperature of the organic solvent solution containing the polyfunctional acid halide is preferably 10°C or higher and 50°C or lower, and more preferably 20°C or higher and 45°C or lower, since the bonding between the amino group and the polyfunctional acid halide is likely to be promoted when the temperature is high, but when the temperature is too high, the semipermeable membrane is influenced by heat.

In the step (a) and the step (b), the step (b) is preferably performed after the step (a). In the coarse pores, since the carboxy group is exposed by hydrolysis of the polyamide, the polyfunctional amine and the polyfunctional carboxylic acid or the polyfunctional acid halide can be efficiently bonded to the polyamide by performing the step (b) after the step (a). Similarly, in the step (A) and the step (B), the step (B) is preferably performed after the step (A).

In addition, by alternately repeating the step (a) and the step (b) twice or more, a removal performance improvement effect can be enhanced. The repetition of the step (a) and the step (b) is preferably ended at the step (b). This is because the removal performance and the water permeation performance can be stabilized by modifying the

amino group with a carboxy group. Similarly, the step (A) and the step (B) are also preferably repeated alternately twice or more, and the repetition of the step (A) and the step (B) is preferably ended at the step (B).

The contact of the polyfunctional amine aqueous solution and the polyfunctional carboxylic acid aqueous solution or the polyfunctional acid halide solution with the separation functional layer can be performed in a state where the polyamide-based semipermeable membrane is incorporated into a semipermeable membrane element (sometimes simply referred to as an "element"). These solutions may be continuously supplied to the element, the semipermeable membrane may be immersed in these solutions by allowing the element to stand after the solution is supplied to the element, or the element may be immersed in the solutions. The solution can be brought into contact with the separation functional layer by flowing the solution through a supply-side flow channel of the semipermeable membrane in the element.

Note that, the polyfunctional amine aqueous solution, the polyfunctional carboxylic acid aqueous solution, and the condensing agent may be simultaneously supplied to the element, or the polyfunctional amine aqueous solution or the polyfunctional carboxylic acid aqueous solution may be supplied after an aqueous solution containing only the condensing agent is supplied to the semipermeable membrane element.

In addition, the contact time of the polyfunctional amine aqueous solution with the surface of the separation functional layer is preferably longer than the contact time of the polyfunctional carboxylic acid aqueous solution or the organic solvent solution containing the polyfunctional acid halide with the surface of the separation functional layer. A total treatment time can be shortened by making the contact time of the polyfunctional amine aqueous solution with the surface of the separation functional layer longer than the contact time of the polyfunctional carboxylic acid aqueous solution or the organic solvent solution containing the polyfunctional acid halide with the surface of the separation functional layer.

In the present embodiment, it is preferable that the semipermeable membrane is incorporated into a semipermeable membrane element, and the step (a) and the step (b) are performed on the semipermeable membrane element showing at least one of a salt permeability higher than an initial value by 10% or more and a neutral molecule permeability higher than an initial value by 10% or more. The same applies to the step (A) and the step (B).

Here, the "initial value" is a salt permeability or a neutral molecule permeability calculated based on a standard salt removal rate or a standard neutral molecule removal rate described in the specification sheet of the element. The salt permeability and the neutral molecule permeability of the element are calculated according to the following equations.

$$\text{Salt permeability (\%)} = 100 - \text{salt removal rate (\%)}$$

$$\text{Neutral molecule permeability (\%)} = 100 - \text{neutral molecule removal rate (\%)}$$

(4) Bonding by Covalent Bonding

In the present embodiment, both the bonding in the step (a) and the bonding in the step (b) are preferably covalent bonding. Since bonding having a high bonding force can be obtained by covalent bonding, the membrane performance can be more stably maintained even after an operation for a long time or after contact with a chemical solution such as an acid or an alkali. In order to make the bonding in the step (a) be covalent bonding, for example, a condensing agent can be used, and in order to make the bonding in the step (b) be covalent bonding, a condensing agent or a polyfunctional acid halide solution can be used. The same applies to the step (A) and the step (B).

(5) Condensing Agent

Examples of the condensing agent for use in the step (a) and the step (b) or the step (A) and the step (B) include: carbodiimide-based condensing agents such as N,N'-diisopropylcarbodiimide, N,N'-dicyclohexylcarbodiimide, 1-(3-dimethylaminopropyl)-3-ethylcarbodiimide, and 1-(3-dimethylaminopropyl)-3-ethylcarbodiimide hydrochloride (hereinafter "EDC-HCl"); imidazole-based condensing agents such as N,N'-carbonyldiimidazole and 1,1'-carbonyldi(1,2,4-triazole); triazine-based condensing agents such as 4-(4,6-dimethoxy-1,3,5-triazin-2-yl)-4-methylmorpholinium chloride (hereinafter "DMT-MM"), 3-(diethoxyphosphoryloxy)-1,2,3-benzotriazin-4(3H)-one, O-(benzotriazol-1-yl)-N,N,N',N'-tetramethyluronium hexafluorophosphate, O-(3,4-dihydro-4-oxo-1,2,3-benzotriazin-3-yl)-N,N,N',N'-tetramethyluronium tetrafluoroborate, and (4,6-dimethoxy-1,3,5-triazin-2-yl)-(2-octoxy-2-oxoethyl)dimethylammonium trifluoromethanesulfonate; phosphonium-based condensing agents such as 1H-benzotriazol-1-yloxytris(dimethylamino)phosphonium hexafluorophosphate, (7-azabenzotriazol-1-yloxy)tripyrrolidinophosphonium hexafluorophosphate, bromotris(dimethylamino)phosphonium hexafluorophosphate, and chlorotripyrrolidinophosphonium hexafluorophosphate; uronium-based condensing agents such as O-(7-azabenzotriazol-1-yl)-N,N,N',N'-tetramethyluronium hexafluorophosphate, O-(N-succinimidyl)-N,N,N',N'-tetramethyluronium tetrafluoroborate, O-(N-succinimidyl)-N,N,N',N'-tetramethyluronium hexafluorophosphate, S-(1-oxido-2-pyridyl)-N,N,N',N'-tetramethylthiuronium tetrafluoroborate, and O-[2-oxo-1(2H)-pyridyl]-N,N,N',N'-tetramethyluronium tetrafluoroborate; {{[(1-cyano-2-ethoxy-2-oxoethylidene)amino]oxy}-4-morpholinomethylene}dimethylammonium hexafluorophosphate; 2-chloro-1,3-dimethylimidazolinium hexafluorophosphate; 1-(chloro-1-pyrrolidinylmethylene)pyrrolidinium hexafluorophosphate; 2-fluoro-1,3-dimethylimidazolinium hexafluorophosphate; fluoro-N,N,N',N'-tetramethylformamidinium hexafluorophosphate; and sulfuric acid.

Among the above, a carbodiimide-based condensing agent or a triazine-based condensing agent is preferred, and EDC-HCl can be preferably used in the case of a carbodiimide-based condensing agent, and DMT-MM can be preferably used in the case of a triazine-based condensing agent, from the viewpoint of being preferred for condensation in a water-containing system.

(6) Other Elements

The polyfunctional amine aqueous solution and the polyfunctional carboxylic acid aqueous solution or the organic solvent containing the polyfunctional acid halide may each contain a compound such as an acylation catalyst, a polar solvent, an acid scavenger, or an antioxidant, if necessary.

<Washing>

Before the treatments in the step (a) and the step (b) and the treatments in the step (A) and the step (B), the polyamide-based semipermeable membrane may be washed using a chemical solution. A substance (fouling) deposited on the membrane surface can be removed by washing.

The inorganic fouling (scale) is mainly washed using an acid, and examples thereof include hydrochloric acid, nitric acid, sulfuric acid, citric acid, and oxalic acid. The lower the pH of the acid, the greater the washing effect, but the greater the deterioration of the semipermeable membrane. Therefore, the pH is preferably 0 or more and 4 or less, and more preferably 1 or more and 3 or less.

The organic fouling is mainly washed using an alkali, and examples thereof include sodium hydroxide and potassium hydroxide. The greater the pH of the alkali, the greater the washing effect. Therefore, the pH is preferably 10 or more and 14 or less, and more preferably 11 or more and 13 or less.

In the case where an oxidizing agent such as chlorine is used for washing bio-fouling, examples of the oxidizing agent include a hypochlorite, a chlorinated isocyanurate, a percarbonate, ozone, and potassium permanganate.

Only one kind of chemical agent may be used for washing, or a plurality of kinds of chemical agents may be used.

<Semipermeable Membrane>

The above treatment method can be widely applied to a semipermeable membrane including a separation functional layer containing a polyamide (polyamide-based semipermeable membrane). The semipermeable membrane preferably has separation performance as a reverse osmosis membrane or a nanofiltration membrane.

The semipermeable membrane may further include a support and be used in the form of a composite membrane. The support may include a substrate and a porous support layer, or may include only a porous support.

The substrate is preferably a nonwoven fabric (including a long fiber nonwoven fabric and a short fiber nonwoven fabric) or a woven and knitted fabric. The substrate is made of, for example, a polyester-based polymer, a polyamide-based polymer, a polyolefin-based polymer, or a mixture or copolymer thereof.

The porous support layer is a porous layer having a structure denser than that of the substrate. The separation functional layer is formed on the porous support layer, and a pore diameter of a surface of the porous support layer on a separation functional layer side is, for example, 0.1 nm or more and 100 nm or less.

Examples of a material constituting the porous support layer include a polysulfone, a polyethersulfone, a polyamide, a polyester, a cellulose-based polymer, a vinyl polymer, a polyphenylene sulfide, a polyphenylene sulfide sulfone, a polyphenylene sulfone, and a polyphenylene oxide. Here, examples of the cellulose-based polymer include cellulose acetate and cellulose nitrate, and examples of the vinyl polymer include a polyethylene, a polypropylene, a polyvinyl chloride, and a polyacrylonitrile.

The separation functional layer preferably contains a crosslinked aromatic polyamide as a main component. The main component means a component occupying 50 mass% or more of the components in the separation functional layer. A content of the crosslinked aromatic polyamide in the separation functional layer is preferably 80 mass% or more, and more preferably 90 mass% or more.

The crosslinked aromatic polyamide means a polymer of a polyfunctional aromatic amine and a polyfunctional aromatic acid chloride.

As the polyfunctional aromatic amine and polyfunctional aromatic acid chloride, the compounds exemplified for the step (a) and the step (b) in the treatment method described above are preferably used.

The separation functional layer is preferably formed by interfacial polymerization using an aqueous solution

containing a polyfunctional aromatic amine and an organic solvent solution containing a polyfunctional aromatic acid chloride. The step of interfacial polymerization includes (i) a step of applying an aqueous solution containing a polyfunctional aromatic amine to a support (to a porous support layer in the case where the support includes a substrate and the porous support layer), and (ii) a step of applying an organic solvent solution containing a polyfunctional aromatic acid chloride to the support after the step (i) (to a porous support layer in the case where the support includes a substrate and the porous support layer).

In the steps (i) and (ii), examples of the application method include immersion, showering, and coating.

As an organic solvent in the step (ii), the solvents exemplified in the step (b) in the treatment method described above are preferably applied.

<Semipermeable Membrane Element>

The semipermeable membrane is wound around a tubular water collection pipe in which a large number of pores are bored together with a supply-side flow channel material such as a plastic net, a permeation-side flow channel material such as a tricot, and a film for increasing pressure resistance as necessary, and is suitably used as a spiral type semipermeable membrane element. Further, the semipermeable membrane can also be used as a semipermeable membrane module in which such elements are connected in series or in parallel and accommodated in a pressure vessel.

In addition, the semipermeable membrane, and the element and the module thereof described above can be combined with a pump for supplying feed water thereto, a device for pretreating supply water, and the like to implement a fluid separation apparatus. By using this separation apparatus, the feed water can be separated into permeated water, such as drinking water, and concentrated water, which does not permeate through the membrane, to obtain intended water.

<Treatment Apparatus>

In order to perform the above method for treating a semipermeable membrane, an apparatus for treating a semipermeable membrane element according to the present embodiment includes: a first tank configured to store an aqueous solution containing a polyfunctional amine; a second tank configured to store at least one of an aqueous solution containing a polyfunctional carboxylic acid and an organic solvent solution containing a polyfunctional acid halide; an element mounting unit configured to mount at least one semipermeable membrane element into which a semipermeable membrane including a separation functional layer containing a polyamide is incorporated; a pipe connecting the first tank and the element mounting unit; a pipe connecting the second tank and the element mounting unit; a first pump between the first tank and the element mounting unit; and a second pump between the second tank and the element mounting unit. Specifically, the apparatus for treating a semipermeable membrane element according to the present embodiment includes a semipermeable membrane unit including a vessel as an element mounting unit in which a semipermeable membrane element is loaded, a pipe connecting the semipermeable membrane unit and each tank, and a pump connected to the pipe.

The pipes connecting the first tank and the second tank to the semipermeable membrane element are preferably connected such that each solution is supplied from the separation functional layer side of the semipermeable membrane.

The treatment apparatus may further include a tank for a washing solution, a pump, and a pipe system.

The polyamide-based semipermeable membrane to be treated by the treatment method according to the present invention is a semipermeable membrane whose removal performance does not reach a desired level or whose removal performance has decreased. For example, when the step (a) and the step (b) or the step (A) and the step (B) are performed on the semipermeable membrane subjected to the above washing treatment, specifically, a semipermeable membrane in contact with at least one kind of chemical agent selected from the group consisting of an acid having a pH of 4 or less, an alkali having a pH of 10 or more, and an oxidizing agent, the removal performance can be improved. That is, the present invention also provides a method for improving removal performance of a polyamide-based semipermeable membrane.

The present invention also provides a method for producing a semipermeable membrane element, the method including a step of treating a polyamide-based semipermeable membrane by using the treatment method including the step (a) and the step (b) or the step (A) and the step (B).

<Use of Semipermeable Membrane Element>

The semipermeable membrane element obtained by the above production method is used as a semipermeable membrane module by being connected in series or in parallel and accommodated in a pressure vessel. The semipermeable membrane element and the semipermeable membrane module can be combined with a pump for supplying a fluid thereto, a device for pretreating a fluid, and the like to implement a fluid treatment apparatus.

A fluid treatment method according to the present invention treats a fluid using the semipermeable membrane

element obtained by the above production method, and is suitable for treating, for example, water containing salt or a harmful substance, factory wastewater, domestic wastewater, and the like.

## Examples

Hereinafter, the present invention is described more specifically with reference to Examples. However, the present invention is not limited thereto.

### (Membrane Permeation Flux)

Seawater (TDS concentration: 3.5%, boron concentration: about 5 ppm) prepared to a pH of 6.5 was supplied to the element at an operating pressure of 5.5 MPa and a recovery rate of 8% to perform a membrane filtration treatment for 24 hours, and the amount of membrane permeation of the feed water (seawater) was expressed as a membrane permeation flux ($m^3/m^2$/day) by the amount of permeated water per day ($m^3$) per square meter of the membrane surface.

### (Salt (TDS) Removal Rate and Boron Removal Rate)

Seawater (TDS concentration: 3.5%, boron concentration: about 5 ppm) prepared to a pH of 6.5 was supplied to the element at an operating pressure of 5.5 MPa and a recovery rate of 8%, the salt (TDS) concentration and the boron concentration in the feed water and the permeated water at the time of performing a membrane filtration treatment for 24 hours were respectively determined by conductivity measurement and by using a ICP emission analyzer (5110 ICP-OES manufactured by Agilent Technologies, Inc.), and a salt (TDS) removal rate and a boron removal rate were calculated according to the following equations.

Salt removal rate (%) = 100 × {1 - (salt concentration in permeated water/salt concentration in feed water)}

Boron removal rate (%) = 100 × {1 - (boron concentration in permeated water/boron concentration in feed water)}

### (Acid Immersion Test)

Seawater (TDS concentration: 3.5%, boron concentration: about 5 ppm) prepared to a pH of 6.5 was supplied to the element at an operating pressure of 5.5 MPa and a recovery rate of 8% to perform a membrane filtration treatment for 24 hours, and then a solution containing sulfuric acid having a pH of 1.0 was supplied to the element at 25°C, followed by allowing to stand for 24 hours. Thereafter, the inside of the element was replaced with pure water.

### (Alkali Immersion Test)

Seawater (TDS concentration: 3.5%, boron concentration: about 5 ppm) prepared to a pH of 6.5 was supplied to the element at an operating pressure of 5.5 MPa and a recovery rate of 8% to perform a membrane filtration treatment for 24 hours, and then a solution containing a sodium hydroxide aqueous solution having a pH of 13.0 was supplied to the element at 25°C, followed by allowing to stand for 24 hours. Thereafter, the inside of the element was replaced with pure water.

### (Membrane Permeation Flux Ratio, Salt (TDS) Permeability Ratio, and Boron Permeability Ratio)

A membrane permeation flux ratio, a salt (TDS) permeability ratio, and a boron permeability ratio were calculated according to the following equations.

Membrane permeation flux ratio = (membrane permeation flux after acid immersion test, after alkali immersion test, or after accelerated deterioration treatment)/(membrane permeation flux before acid immersion test, before alkali immersion test, or before accelerated deterioration treatment)

Salt permeability ratio = {100 - (salt removal rate after acid immersion test, after alkali immersion test, or after accelerated deterioration treatment)}/{ 100 - (salt removal rate before acid immersion test, before alkali immersion test, or before accelerated deterioration treatment) }

Boron permeability ratio = {100 - (boron removal rate after acid immersion test, after alkali immersion test, or after accelerated deterioration treatment)}/{100 - (boron removal rate before acid immersion test, before alkali immersion test, or before accelerated deterioration treatment) }

[Reference Example 1]

Performance evaluation (measurement of the membrane permeation flux, the salt removal rate, and the boron removal rate) of a reverse osmosis membrane element TM810V for seawater desalination manufactured by Toray Industries, Inc. was performed. Thereafter, the performance evaluation was similarly performed on the elements subjected to the acid immersion test or the alkali immersion test.

[Reference Example 2]

A solution containing a sodium hydroxide aqueous solution having a pH of 13.0 was supplied to a reverse osmosis membrane element TM810V for seawater desalination manufactured by Toray Industries, Inc. at 25°C for 24 hours, and then a solution containing sulfuric acid having a pH of 1.0 was supplied thereto at 25°C for 24 hours to perform a membrane accelerated deterioration treatment. Thereafter, the performance evaluation was conducted on the element.

[Reference Example 3]

As in Reference Example 2, a reverse osmosis membrane element TM810V for seawater desalination manufactured by Toray Industries, Inc. was subjected to a membrane accelerated deterioration treatment using an acid and an alkali, and then an aqueous solution containing sodium hypochlorite adjusted to have a chlorine concentration of 100 ppm was further supplied thereto at 25°C for 24 hours to further perform a membrane accelerated deterioration treatment. Thereafter, the performance evaluation was conducted on the element.

[Example 1]

An aqueous solution containing 0.05 mass% of m-phenylenediamine and 0.10 mass% of DMT-MM was supplied to the semipermeable membrane element subjected to the accelerated deterioration treatment and obtained in Reference Example 2 at 25°C for 1.5 hours, and then an aqueous solution containing 0.05 mass% of trimesic acid and 0.10 mass% of DMT-MM was supplied thereto at 25°C for 1.5 hours to perform a treatment. After the treatment, the performance evaluation of the semipermeable membrane element was conducted, then an acid immersion test or an alkali immersion test was performed, and the performance evaluation of the semipermeable membrane element was conducted again.

[Example 2]

A treatment was performed in the same manner as in Example 1 except that the m-phenylenediamine aqueous solution and the trimesic acid aqueous solution were each supplied twice. After the treatment, the performance evaluation of the semipermeable membrane element was conducted, then an acid immersion test or an alkali immersion test was performed, and the performance evaluation of the semipermeable membrane element was conducted again. By repeating the treatment twice, the performance of the semipermeable membrane element after the treatment was further improved as compared with Example 1.

[Example 3]

A treatment was performed in the same manner as in Example 1 except that the m-phenylenediamine aqueous solution and the trimesic acid aqueous solution were each supplied three times. After the treatment, the performance evaluation of the semipermeable membrane element was conducted, then an acid immersion test or an alkali immersion test was performed, and the performance evaluation of the semipermeable membrane element was conducted again. By repeating the treatment three times, the performance of the semipermeable membrane element after the treatment was further improved as compared with Example 2, and was improved to be similar to the performance of Reference Example 1.

[Example 4]

A treatment was performed in the same manner as in Example 1 except that the supply order of the m-phenylenediamine aqueous solution and the trimesic acid aqueous solution was reversed and the solutions were each

supplied three times. After the treatment, the performance evaluation of the semipermeable membrane element was conducted, then an acid immersion test or an alkali immersion test was performed, and the performance evaluation of the semipermeable membrane element was conducted again. In the case where the treatment was performed in the order of the step (b) and the step (a), the performance improvement effect was lower than that in Example 3.

[Example 5]

A treatment was performed in the same manner as in Example 1 except that the m-phenylenediamine aqueous solution and the trimesic acid aqueous solution were alternately supplied twice and then the m-phenylenediamine aqueous solution was supplied. After the treatment, the performance evaluation of the semipermeable membrane element was conducted, then an acid immersion test or an alkali immersion test was performed, and the performance evaluation of the semipermeable membrane element was conducted again. The performance of the semipermeable membrane element was sufficiently improved by the treatment, but since the terminal of the polyamide was an amino group, the performance deterioration after acid immersion and alkali immersion was larger than in Examples 2 and 3 in which the terminal of the polyamide was a carboxy group.

[Example 6]

A treatment was performed in the same manner as in Example 1 except that the supply order of the m-phenylenediamine aqueous solution and the trimesic acid aqueous solution was reversed, the solutions were each supplied twice, and then the trimesic acid aqueous solution was supplied. After the treatment, the performance evaluation of the semipermeable membrane element was conducted, then an acid immersion test or an alkali immersion test was performed, and the performance evaluation of the semipermeable membrane element was conducted again. The performance improvement effect was lower than that in Example 4, but since the terminal of the polyamide was a carboxy group, the performance deterioration after acid immersion and alkali immersion was lower than that in Example 4.

[Example 7]

A treatment was performed in the same manner as in Example 3 except that a decane solution containing 0.05 mass% of trimesoyl chloride was supplied at 25°C for 1.5 hours instead of the aqueous solution containing 0.05 mass% of trimesic acid and 0.10 mass% of DMT-MM. After the treatment, the performance evaluation of the semipermeable membrane element was conducted, then an acid immersion test or an alkali immersion test was performed, and the performance evaluation of the semipermeable membrane element was conducted again. Even when a decane solution containing trimesoyl chloride was used instead of the aqueous solution containing trimesic acid and DMT-MM, the performance of the semipermeable membrane element after the treatment was improved as in Example 3.

[Example 8]

A treatment was performed in the same manner as in Example 3 except that the semipermeable membrane element subjected to the accelerated deterioration treatment and obtained in Reference Example 3 was used. After the treatment, the performance evaluation of the semipermeable membrane element was conducted, then an acid immersion test or an alkali immersion test was performed, and the performance evaluation of the semipermeable membrane element was conducted again. With respect to the semipermeable membrane element which was further deteriorated, the performance improvement effect was insufficient under this treatment condition.

[Example 9]

A treatment was performed in the same manner as in Example 8 except that the concentrations of m-phenylenediamine, trimesic acid, and DMT-MM were doubled. After the treatment, the performance evaluation of the semipermeable membrane element was conducted, then an acid immersion test or an alkali immersion test was performed, and the performance evaluation of the semipermeable membrane element was conducted again. When the supply concentration in each treatment was doubled, the reaction rate in each treatment was increased, and the performance of the semipermeable membrane element after the treatment was improved as compared with Example 8.

[Example 10]

A treatment was performed in the same manner as in Example 8 except that the supply time in each treatment was changed to 4 hours. After the treatment, the performance evaluation of the semipermeable membrane element was

conducted, then an acid immersion test or an alkali immersion test was performed, and the performance evaluation of the semipermeable membrane element was conducted again. When the supply time in each treatment was set to 4 hours, the reaction rate in each treatment was increased, and the performance of the semipermeable membrane element after the treatment was improved as compared with Example 8.

[Example 11]

A treatment was performed in the same manner as in Example 8 except that the supply temperature in each treatment was changed to 40°C. After the treatment, the performance evaluation of the semipermeable membrane element was conducted, then an acid immersion test or an alkali immersion test was performed, and the performance evaluation of the semipermeable membrane element was conducted again. When the supply temperature in each treatment was set to 40°C, the reaction rate in each treatment was increased, and the performance of the semipermeable membrane element after the treatment was improved as compared with Example 8.

[Example 12]

A treatment was performed in the same manner as in Example 8 except that the supply time and the supply temperature in each treatment were changed to 4 hours and 40°C, respectively. After the treatment, the performance evaluation of the semipermeable membrane element was conducted, then an acid immersion test or an alkali immersion test was performed, and the performance evaluation of the semipermeable membrane element was conducted again. When the supply concentration was doubled, the supply time was set to 4 hours, and the supply temperature was set to 40°C in each treatment, the reaction rate in each treatment was increased, and the performance of the semipermeable membrane element after the treatment was greatly improved as compared with Example 8, and improved to be similar to the performance of Reference Example 1.

[Comparative Example 1]

An aqueous solution containing 0.05 mass% of m-phenylenediamine and 0.10 mass% of DMT-MM was supplied to the semipermeable membrane element subjected to the accelerated deterioration treatment and obtained in Reference Example 2 at 25°C for 1.5 hours to perform a treatment. After the treatment, the performance evaluation of the semipermeable membrane element was conducted, then an acid immersion test or an alkali immersion test was performed, and the performance evaluation of the semipermeable membrane element was conducted again. When only the step (a) was performed, the performance deterioration after acid immersion and alkali immersion was larger than that in Example 3.

[Comparative Example 2]

An aqueous solution containing 0.05 mass% of trimesic acid and 0.10 mass% of DMT-MM was supplied to the semipermeable membrane element subjected to the accelerated deterioration treatment and described in Reference Example 2 at 25°C for 1.5 hours to perform a treatment. After the treatment, the performance evaluation of the semipermeable membrane element was conducted, then an acid immersion test or an alkali immersion test was performed, and the performance evaluation of the semipermeable membrane element was conducted again. When only the step (b) was performed, the performance improvement effect for the semipermeable membrane element after the treatment was low.

The treatment methods in Examples 1 to 12 and Comparative Examples 1 and 2 are shown in Table 1, the properties of the semipermeable membrane element obtained in Reference Examples 1 to 3 are shown in Table 2, and the performance of the semipermeable membrane elements obtained in Reference Example 1, Examples 1 to 12, and Comparative Examples 1 and 2 are shown in Table 3.

As shown in Examples 1 to 12, it has been found that the performance of the semipermeable membrane element to which the treatment method according to the present embodiment is applied is similar to the initial performance before the accelerated deterioration, and the performance improvement effect is excellent in a short time.

Table 1

| | Treatment | | | |
|---|---|---|---|---|
| | Membrane to be treated | Amine aqueous solution | | |
| | | Amine | | Condensing agent |
| | - | Kind | mass% | mass% |
| Example 1 | Reference Example 2 | m-Phenylenediamine | 0.05 | 0.10 |
| Example 2 | Reference Example 2 | m-Phenylenediamine | 0.05 | 0.10 |
| Example 3 | Reference Example 2 | m-Phenylenediamine | 0.05 | 0.10 |
| Example 4 | Reference Example 2 | m-Phenylenediamine | 0.05 | 0.10 |
| Example 5 | Reference Example 2 | m-Phenylenediamine | 0.05 | 0.10 |
| Example 6 | Reference Example 2 | m-Phenylenediamine | 0.05 | 0.10 |
| Example 7 | Reference Example 2 | m-Phenylenediamine | 0.05 | 0.10 |
| Example 8 | Reference Example 3 | m-Phenylenediamine | 0.05 | 0.10 |
| Example 9 | Reference Example 3 | m-Phenylenediamine | 0.10 | 0.20 |
| Example 10 | Reference Example 3 | m-Phenylenediamine | 0.05 | 0.10 |
| Example 11 | Reference Example 3 | m-Phenylenediamine | 0.05 | 0.10 |
| Example 12 | Reference Example 3 | m-Phenylenediamine | 0.10 | 0.20 |
| Comparative Example 1 | Reference Example 2 | m-Phenylenediamine | 0.05 | 0.10 |
| Comparative Example 2 | Reference Example 2 | - | - | - |

Table 1 (continued)

| | Treatment | | | | | | | |
|---|---|---|---|---|---|---|---|---|
| | Carboxylic acid solution | | | Number of repetition of treatment | First step | Last step | Total treatment time | Treatment temperature |
| | Carboxylic acid or carboxylic acid chloride | | Condensing agent | | | | | |
| | Kind | mass% | mass% | - | - | - | hr | °C |
| Example 1 | Trimesic acid | 0.05 | 0.10 | 1.0 | a | b | 3.0 | 25 |
| Example 2 | Trimesic acid | 0.05 | 0.10 | 2.0 | a | b | 6.0 | 25 |
| Example 3 | Trimesic acid | 0.05 | 0.10 | 3.0 | a | b | 9.0 | 25 |
| Example 4 | Trimesic acid | 0.05 | 0.10 | 3.0 | b | a | 9.0 | 25 |
| Example 5 | Trimesic acid | 0.05 | 0.10 | 2.5 | a | a | 7.5 | 25 |
| Example 6 | Trimesic acid | 0.05 | 0.10 | 2.5 | b | b | 7.5 | 25 |
| Example 7 | Trimesoyl chloride | 0.05 | - | 3.0 | a | b | 9.0 | 25 |
| Example 8 | Trimesic acid | 0.05 | 0.10 | 3.0 | a | b | 9.0 | 25 |
| Example 9 | Trimesic acid | 0.05 | 0.10 | 3.0 | a | b | 9.0 | 25 |

(continued)

| | Treatment | | | | | | | |
|---|---|---|---|---|---|---|---|---|
| | Carboxylic acid solution | | | Number of repetition of treatment | First step | Last step | Total treatment time | Treatment temperature |
| | Carboxylic acid or carboxylic acid chloride | | Condensing agent | | | | | |
| | Kind | mass% | mass% | - | - | - | hr | °C |
| Example 10 | Trimesic acid | 0.05 | 0.10 | 3.0 | a | b | 24.0 | 25 |
| Example 11 | Trimesic acid | 0.05 | 0.10 | 3.0 | a | b | 9.0 | 40 |
| Example 12 | Trimesic acid | 0.10 | 0.20 | 3.0 | a | b | 24.0 | 40 |
| Comparative Example 1 | - | - | - | 0.5 | a | - | 1.5 | 25 |
| Comparative Example 2 | Trimesic acid | 0.05 | 0.10 | 0.5 | b | | 1.5 | 25 |

Table 2

| | Performance | | | | | |
|---|---|---|---|---|---|---|
| | Membrane permeation flux | Salt removal rate | Boron removal rate | Membrane permeation flux ratio | Salt permeability ratio | Boron permeability ratio |
| | $m^3/m^2/d$ | % | % | - | - | - |
| Reference Example 1 | 0.87 | 99.73 | 93.77 | - | - | - |
| Reference Example 2 | 1.17 | 99.57 | 89.64 | 1.34 | 1.59 | 1.66 |
| Reference Example 3 | 1.72 | 99.25 | 68.57 | 1.98 | 2.78 | 5.04 |

Table 3

| | Performance after treatment | | | | | |
|---|---|---|---|---|---|---|
| | Membrane permeation flux | Salt removal rate | Boron removal rate | Membrane permeation flux ratio | Salt permeability ratio | Boron permeability ratio |
| | $m^3/m^2/d$ | % | % | - | - | - |
| Reference Example 1 | 0.87 | 99.73 | 93.77 | - | - | - |
| Example 1 | 1.11 | 99.62 | 90.33 | 1.28 | 1.41 | 1.55 |
| Example 2 | 1.00 | 99.69 | 91.34 | 1.15 | 1.15 | 1.39 |
| Example 3 | 0.83 | 99.72 | 92.56 | 0.95 | 1.04 | 1.19 |
| Example 4 | 0.90 | 99.66 | 92.19 | 1.03 | 1.26 | 1.25 |
| Example 5 | 0.91 | 99.65 | 92.22 | 1.05 | 1.30 | 1.25 |
| Example 6 | 0.89 | 99.62 | 92.02 | 1.02 | 1.41 | 1.28 |
| Example 7 | 0.85 | 99.73 | 92.98 | 0.98 | 1.00 | 1.13 |
| Example 8 | 1.44 | 99.41 | 75.96 | 1.66 | 2.19 | 3.86 |
| Example 9 | 1.38 | 99.46 | 78.37 | 1.59 | 2.00 | 3.47 |
| Example 10 | 1.21 | 99.56 | 83.25 | 1.39 | 1.63 | 2.69 |

(continued)

| | Performance after treatment | | | | | |
|---|---|---|---|---|---|---|
| | Membrane permeation flux | Salt removal rate | Boron removal rate | Membrane permeation flux ratio | Salt permeability ratio | Boron permeability ratio |
| | $m^3/m^2/d$ | % | % | - | - | - |
| Example 11 | 1.13 | 99.63 | 86.49 | 1.30 | 1.37 | 2.17 |
| Example 12 | 0.89 | 99.73 | 92.39 | 1.02 | 1.00 | 1.22 |
| Comparative Example 1 | 0.98 | 99.60 | 90.01 | 1.13 | 1.48 | 1.60 |
| Comparative Example 2 | 1.04 | 99.59 | 89.92 | 1.20 | 1.52 | 1.62 |

Table 3 (continued)

| | Performance after acid immersion test | | | | | |
|---|---|---|---|---|---|---|
| | Membrane permeation flux | Salt removal rate | Boron removal rate | Membrane permeation flux ratio | Salt permeability ratio | Boron permeability ratio |
| | $m^3/m^2/d$ | % | % | - | - | - |
| Reference Example 1 | 1.05 | 99.63 | 91.10 | 1.21 | 1.37 | 1.43 |
| Example 1 | 1.35 | 99.47 | 85.79 | 1.22 | 1.40 | 1.47 |
| Example 2 | 1.23 | 99.57 | 87.44 | 1.23 | 1.39 | 1.45 |
| Example 3 | 1.00 | 99.62 | 89.51 | 1.20 | 1.35 | 1.41 |
| Example 4 | 1.14 | 99.52 | 87.89 | 1.27 | 1.42 | 1.55 |
| Example 5 | 1.15 | 99.51 | 87.94 | 1.26 | 1.41 | 1.55 |
| Example 6 | 1.07 | 99.48 | 88.67 | 1.20 | 1.36 | 1.42 |
| Example 7 | 1.04 | 99.64 | 89.96 | 1.22 | 1.35 | 1.43 |
| Example 8 | 1.71 | 99.21 | 66.10 | 1.19 | 1.34 | 1.41 |
| Example 9 | 1.64 | 99.28 | 69.50 | 1.19 | 1.34 | 1.41 |
| Example 10 | 1.44 | 99.40 | 76.05 | 1.19 | 1.36 | 1.43 |
| Example 11 | 1.34 | 99.50 | 80.95 | 1.19 | 1.35 | 1.41 |
| Example 12 | 1.07 | 99.63 | 89.35 | 1.20 | 1.37 | 1.40 |
| Comparative Example 1 | 1.24 | 99.44 | 84.32 | 1.27 | 1.41 | 1.57 |
| Comparative Example 2 | 1.26 | 99.44 | 85.48 | 1.21 | 1.36 | 1.44 |

Table 3 (continued)

| | Performance after alkali immersion test | | | | | |
|---|---|---|---|---|---|---|
| | Membrane permeation flux | Salt removal rate | Boron removal rate | Membrane permeation flux ratio | Salt permeability ratio | Boron permeability ratio |
| | $m^3/m^2/d$ | % | % | - | - | - |
| Reference Example 1 | 1.02 | 99.67 | 91.46 | 0.74 | 1.22 | 1.37 |
| Example 1 | 1.32 | 99.53 | 86.08 | 1.19 | 1.25 | 1.44 |
| Example 2 | 1.20 | 99.61 | 87.79 | 1.20 | 1.27 | 1.41 |
| Example 3 | 0.98 | 99.65 | 89.73 | 1.18 | 1.24 | 1.38 |

(continued)

| | Performance after alkali immersion test | | | | | |
|---|---|---|---|---|---|---|
| | Membrane permeation flux | Salt removal rate | Boron removal rate | Membrane permeation flux ratio | Salt permeability ratio | Boron permeability ratio |
| | $m^3/m^2/d$ | % | % | - | - | - |
| Example 4 | 1.16 | 99.56 | 88.13 | 1.29 | 1.30 | 1.52 |
| Example 5 | 1.18 | 99.54 | 87.94 | 1.30 | 1.31 | 1.55 |
| Example 6 | 1.04 | 99.53 | 88.99 | 1.17 | 1.23 | 1.38 |
| Example 7 | 1.00 | 99.66 | 90.24 | 1.18 | 1.25 | 1.39 |
| Example 8 | 1.73 | 99.26 | 66.34 | 1.20 | 1.25 | 1.40 |
| Example 9 | 1.66 | 99.33 | 69.72 | 1.20 | 1.24 | 1.40 |
| Example 10 | 1.44 | 99.45 | 76.72 | 1.19 | 1.24 | 1.39 |
| Example 11 | 1.33 | 99.55 | 81.63 | 1.18 | 1.22 | 1.36 |
| Example 12 | 1.04 | 99.67 | 89.50 | 1.17 | 1.22 | 1.38 |
| Comparative Example 1 | 1.27 | 99.48 | 84.62 | 1.30 | 1.31 | 1.54 |
| Comparative Example 2 | 1.24 | 99.49 | 85.99 | 1.19 | 1.24 | 1.39 |

Although the present invention has been described in detail with reference to specific embodiments, it is apparent to those skilled in the art that various changes and modifications may be made without departing from the spirit and scope of the present invention. The present application is based on Japanese Patent Application No. 2022-204061 filed on December 21, 2022, the content of which is incorporated herein by reference.

## Claims

1. A method for treating a semipermeable membrane including a separation functional layer containing a polyamide, the treatment method comprising:

   (a) a step of bonding a polyfunctional amine to the polyamide; and
   (b) a step of bonding at least one of a polyfunctional carboxylic acid and a polyfunctional acid halide to the polyamide.

2. The treatment method according to claim 1, wherein the step (b) is performed after the step (a).

3. The treatment method according to claim 1 or 2, wherein both of the bonding in the step (a) and the bonding in the step (b) are covalent bonding.

4. The treatment method according to claim 1 or 2, wherein the step (a) includes covalently bonding the polyfunctional amine to the polyamide using a condensing agent.

5. The treatment method according to claim 1 or 2, wherein the step (b) includes covalently bonding the polyfunctional carboxylic acid to the polyamide using a condensing agent.

6. The treatment method according to claim 1 or 2, wherein the step (a) and the step (b) are alternately repeated twice or more.

7. The treatment method according to claim 6, wherein the repetition of the step (a) and the step (b) is ended at the step (b).

8. The treatment method according to claim 1 or 2, wherein

the semipermeable membrane is incorporated into a semipermeable membrane element, and
the step (a) and the step (b) are performed on the semipermeable membrane element showing at least one of a salt permeability higher than an initial value by 10% or more and a neutral molecule permeability higher than an initial value by 10% or more.

**9.** The treatment method according to claim 1 or 2, wherein the step (a) and the step (b) are performed on a semipermeable membrane contacted with at least one kind of chemical agent selected from the group consisting of an acid having a pH of 4 or less, an alkali having a pH of 10 or more, and an oxidizing agent.

**10.** A method for treating a semipermeable membrane including a separation functional layer containing a polyamide, the treatment method comprising:

(A) a step of bringing an aqueous solution containing a polyfunctional amine and a condensing agent into contact with the separation functional layer; and
(B) a step of bringing at least one of an aqueous solution containing a polyfunctional carboxylic acid and an organic solvent solution containing a polyfunctional acid halide into contact with the separation functional layer.

**11.** The treatment method according to claim 10, wherein the step (B) is performed after the step (A).

**12.** The treatment method according to claim 4, wherein the condensing agent is a carbodiimide-based condensing agent or a triazine-based condensing agent.

**13.** The treatment method according to claim 5, wherein the condensing agent is a carbodiimide-based condensing agent or a triazine-based condensing agent.

**14.** The treatment method according to claim 10 or 11, wherein the condensing agent is a carbodiimide-based condensing agent or a triazine-based condensing agent.

**15.** A method for producing a semipermeable membrane element incorporating a semipermeable membrane including a separation functional layer containing a polyamide, the method comprising:
a step of treating the semipermeable membrane by using the treatment method according to claim 1 or 10.

**16.** An apparatus for treating a semipermeable membrane element using the treatment method according to claim 1 or 2, the apparatus comprising:

a first tank configured to store an aqueous solution containing a polyfunctional amine;
a second tank configured to store at least one of an aqueous solution containing a polyfunctional carboxylic acid and an organic solvent solution containing a polyfunctional acid halide;
an element mounting unit configured to mount at least one semipermeable membrane element into which a semipermeable membrane including a separation functional layer containing a polyamide is incorporated;
a pipe connecting the first tank and the element mounting unit;
a pipe connecting the second tank and the element mounting unit;
a first pump between the first tank and the element mounting unit; and
a second pump between the second tank and the element mounting unit.

**17.** A fluid treatment apparatus for treating a fluid using a semipermeable membrane element obtained by the method for producing a semipermeable membrane element according to claim 15.

**18.** A fluid treatment method for treating a fluid using a semipermeable membrane element obtained by the method for producing a semipermeable membrane element according to claim 15.

**INTERNATIONAL SEARCH REPORT**

International application No.
**PCT/JP2023/045637**

**A. CLASSIFICATION OF SUBJECT MATTER**

***B01D 71/56***(2006.01)i; ***B01D 65/00***(2006.01)i
FI: B01D71/56; B01D65/00

According to International Patent Classification (IPC) or to both national classification and IPC

**B. FIELDS SEARCHED**

Minimum documentation searched (classification system followed by classification symbols)

B01D71/56; B01D65/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | CN 111282439 A (XU, Xiaoyan) 16 June 2020 (2020-06-16) claims, examples 1-3 | 1-3, 6-7, 10-11, 15-18 |
| Y | | 4-5, 12-14 |
| A | | 8-9 |
| X | JP 1-262922 A (E I DU PONT DE NEMOURS & CO.) 19 October 1989 (1989-10-19) claims, p. 1, left column, lines 15-18, p. 4, lower right column, lines 4-8, examples 1-48 | 1-3, 6-11, 15-18 |
| Y | | 4-5, 12-14 |
| Y | JP 2019-111529 A (TORAY INDUSTRIES, INC.) 11 July 2019 (2019-07-11) paragraph [0042] | 4-5, 12-14 |
| Y | JP 2018-187533 A (TORAY INDUSTRIES, INC.) 29 November 2018 (2018-11-29) paragraphs [0103]-[0106] | 4-5, 12-14 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 February 2024** | **27 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/045637**

| Patent document cited in search report | Publication date (day/month/year) | Patent family member(s) | Publication date (day/month/year) |
|---|---|---|---|
| CN 111282439 A | 16 June 2020 | (Family: none) | |
| JP 1-262922 A | 19 October 1989 | US 5091216 B<br>claims, column 2, lines 15-25, column 5, lines 28-34, examples<br>EP 336999 A2<br>CN 1036908 A<br>KR 10-1989-0016097 A | |
| JP 2019-111529 A | 11 July 2019 | (Family: none) | |
| JP 2018-187533 A | 29 November 2018 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012187469 A
- JP 2022204061 A